# FASCICULE DE BREVET EUROPEEN

(11) **EP 0 977 099 B1**
(45) Date de publication et mention de la délivrance du brevet: **15.12.2004**
(21) Numéro de dépôt: 99401907.3
(22) Date de dépôt: 27.07.1999
(51) Int. Cl.: G05B 19/042, G05B 19/418

(54) **Procédé de mise à jour de valeurs caractéristiques implantées dans une unité d'exploitation programmable d'un système industriel de conduite**
Verfahren zur Aktualisierung charakteristischer Werte in einer programmierbaren Betriebseinheit eines industriellen Steuerungssystems
Method to update characteristic values in a programmable operating unit of a industrial control system

(30) Priorité: 28.07.1998 FR 9809656
(43) Date de publication de la demande: 02.02.2000
(73) Titulaire: Alstom Entreprise SA, 92300 Levallois Perret (FR)
(72) Inventeur: Szymanski, Jacek, 94150 Rungis (FR)
(74) Mandataire: de Lambilly Delorme, Marie Pierre

(56) Documents cités:
- EP-A- 0 822 473
- EP-A- 0 825 506
- EP-A- 0 838 768
- DE-A- 19 704 694

## Description

L'invention concerne un procédé de mise à jour de valeurs caractéristiques, notamment de paramètres et/ou de variables de processus, implantées dans une unité d'exploitation programmable d'un système industriel de conduite dans lequel des transmissions en temps partagé d'informations numérisées sont prévues entre les unités d'exploitation programmables que ce système comporte.

Comme il est connu, la gestion d'un système industriel de conduite de procédé implique la présence d'une architecture de communication pour que les transmissions d'informations entre les diverses unités d'exploitation programmables qui sont susceptibles d'intervenir dans la conduite du procédé soient assurées d'une manière bien adaptée aux différents besoins rencontrés.

Ainsi le document EP 0822 473 divulgue un système de télémaintenance d'équipements industriels délocalisés qui sont supervisés par des ordinateurs hôtes en liaison avec au moins un ordinateur hôte distant de gestion. Les communications entre ordinateurs hôtes sont réalisés en utilisant Internet comme infrastructure de communication. Les protocoles et logiciels d'accès Internet y sont exploités pour communiquer les informations de maintenance des équipements industriels.

Par ailleurs dans de nombreux cas d'exploitation, il est avantageux de pouvoir accéder à volonté à des informations contenues dans une mémoire d'une quelconque unité exploitation programmable d'un système industriel par l'intermédiaire d'une autre unité programmable de ce système, via l'architecture de communication du système et quelle que soit la localisation de cette autre unité par rapport au système.

Il est connu de stocker des informations en provenance d'un système industriel par pages d'une manière statique dans une unité de stockage de masse commune d'un système à laquelle les diverses unités d'exploitation du système peuvent s'adresser pour obtenir les informations stockées dont elles ont respectivement besoin. Toutefois cette solution n'est pas toujours satisfaisante dans la mesure où l'exploitation de l'unité de stockage par les unités lui demandant des informations sont coûteuses en temps et où il est difficile de réaliser au cours du fonctionnement du système les évolutions qui s'avèrent nécessaires au fur et à mesure de l'exploitation de ce système.

L'invention propose donc un procédé de mise à jour de valeurs caractéristiques de processus d'un système industriel de conduite de processus comportant une pluralité d'unités d'exploitation programmables interconnectées au travers d'une architecture de communication, dans lequel les valeurs caractéristiques de processus sont implantées dans des pages HTML stockées au niveau d'une unité.

Selon une caractéristique de l'invention, le procédé prévoit:
- une mise en mémoire des valeurs caractéristiques de processus réalisée sélectivement dans les unités d'exploitation programmables de terrain où ces valeurs caractéristiques sont exploitées, chacune de ces unités de terrain disposant d'un serveur HTTP qui lui permet de proposer, sur requête au moins une page HTML de structure déterminée dans laquelle les valeurs caractéristiques de processus mises en mémoire par l'unité sont implantées;
- une mise à jour en temps réel des pages HTML par implantation des valeurs caractéristiques de processus venant soit d'être collectées sur le terrain par chaque unité de terrain, soit d'être reçues au travers de l'architecture de communication.

Selon une caractéristique du procédé selon l'invention, la mise à jour d'une page HTML demandée à une unité par une requête externe est réalisée par construction de la page à envoyer par remplissage d'une structure de page HTML établie à partit d'un modèle stocké dans la mémoire centrale de ladite unité, à l'aide des dernières valeurs caractéristiques collectées ou reçues par l'unité.

Selon une caractéristique du procédé selon l'invention, les valeurs caractéristiques de processus stockées par une unité de terrain comprennent des valeurs de variables de processus, des paramètres de dispositif et/ou des valeurs prélevées en temps réel collectées et/ou exploitées par cette unité

L'invention, ses caractéristiques et ses avantages sont précisés dans la description qui suit en liaison avec les figures évoquées ci-dessous.

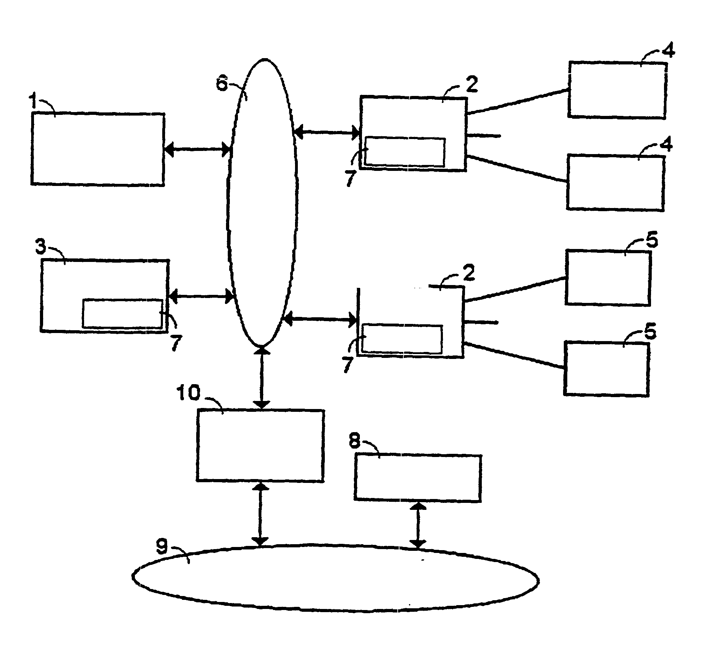

La figure unique présente un schéma synoptique d'une architecture de communication pour système industriel de conduite.

L'architecture de communication illustrée sur la figure unique est supposée destinée à assurer des échanges d'information entre des unités d'exploitation programmables 1, 2, 3 d'un système industriel de conduite de procédé comportant une pluralité de dispositifs de contrôle/commande. Ces derniers sont par exemple des capteurs 4 et des actionneurs 5 qui sont supervisés par certaines des unités programmables, couramment dites de terrain, telles les unités 2.

Les diverses unités d'exploitation programmables sont classiquement organisées autour d'au moins un processeur et d'une mémoire centrale composée d'un ensemble de mémoires mortes et/ou vives, au moins certaines de ces unités, telles les unités de terrain ne comportant usuellement pas de mémoire de masse de type disque dur.

Les unités de terrain 2 sont supposées fournir et/ou recevoir des informations relatives aux opérations, notamment de commande et de mesure, réalisées par les dispositifs qu'elles supervisent de manière permanente. Elles communiquent en fonction des besoins avec d'autres unités de niveau supérieur, telles 1 et 3, du système industriel de conduite par l'intermédiaire de l'architecture de communication qui comporte un ensemble de liaisons de communication 6 auquel les diverses unités peuvent être plus ou moins directement reliées.

Une exploitation partagée dans le temps des liaisons de l'ensemble 6 est prévue pour assurer les transmissions des informations entre unités d'exploitation programmables, en permettant aux informations dont la transmission n'est soumise qu'à des contraintes relativement souples en matière d'urgence d'exploiter les laps de temps plus ou moins régulièrement laissés disponibles par les informations soumises à des contraintes plus sévères.

Il est particulièrement prévu un serveur 7, de type HTTP, dans chacune des unités de terrain 2, afin que chacune de ces unités puisse présenter des informations qui la concerne dans le cadre d'une ou de plusieurs pages HTML. Les informations présentées sont plus particulièrement des valeurs caractéristiques de processus concernant l'unité qui les présente, notamment des paramètres relatifs à des dispositifs inclus ou supervisés par cette unité, des valeurs de variables de processus, des valeurs collectées en temps réel sur le terrain pour cette unité, des valeurs que l'unité exploite.

Chaque unité de terrain 2 stocke donc en mémoire centrale la structure de la ou des pages HTML qu'elle est susceptible de construire à des fins de transmission suite à une requête d'un intervenant parvenant au travers de l'architecture de communication depuis soit une unité d'exploitation, telle ici 3, dûment programmée de l'installation, soit éventuellement d'un ordinateur 8 lui aussi dûment programmé. Cet ordinateur 8 peut être mis en liaison avec l'architecture de communication soit par connexion directe à une des liaisons de l'ensemble 6 que comporte cette architecture soit éventuellement au travers d'un autre réseau de communication 9 et en particulier du réseau Internet, via une unité de passerelle 10 qui ne sera pas développée ici dans la mesure où elle n'a qu'un rapport indirect avec l'invention. L'unité d'exploitation 3 ou l'ordinateur 8 comportent nécessairement une pile de protocoles HTTP/TCP/IP pour pouvoir communiquer avec les serveurs HTTP des unités de terrain 2. Dans l'exemple illustré, il est supposé que l'unité 3 dispose elle-même d'un serveur interne 7, de type HTTP, pour pouvoir elle aussi fournir des informations par intermédiaire de pages HTML sur requête d'un intervenant, ceci pouvant présenter un intérêt dans certaines installations.

L'envoi d'une requête à un serveur 7 d'une unité de terrain 2 par un intervenant, au travers de l'ensemble 6 et éventuellement du réseau de communication 9, déclenche de manière connue en soi la production d'une ou éventuellement de plusieurs pages HTML structurées suivant les indications de structure stockées en mémoire préférablement centrale de l'unité interrogée. Elle est classiquement obtenue après établissement d'une connexion de l'unité ou de l'ordinateur de l'intervenant qui est l'initiateur de la requête à transmettre à l'unité de terrain concernée. Cet intervenant agit alors en tant que client et vient demander une réponse à sa requête au serveur. Les transferts d'information numérisées s'effectuent de manière transparente entre intervenant et serveur.

A chaque nouvelle requête, une page correspondante est construite dans l'unité de terrain au serveur de laquelle cette requête a été adressée. Cette construction est faite à partir d'un modèle de page correspondant, stocké dans la mémoire centrale de cette unité de terrain. Les valeurs caractéristiques de processus qui sont implantées dans cette page, avant envoi à l'intervenant demandeur, comprennent des valeurs de variables de processus et en particulier des valeurs prélevées en temps réel auprès de dispositifs de terrain que supervise l'unité où est construite la page considérée. Ces valeurs sont aussi susceptibles d'être des paramètres de dispositif qui sont alors exploités par les dispositifs que supervise l'unité et qui ont été reçus par l'intermédiaire de la liaison de l'ensemble 6 à laquelle est reliée cette unité.

Il est ainsi possible d'obtenir une mise à jour quasi-permanente des valeurs caractéristiques de processus d'un système de conduite au profit de tout intervenant qui est susceptible d'adresser une requête en vue d'obtenir des informations précises concernant le fonctionnement du système et qui peut ainsi agir directement auprès de l'unité qui a la possibilité fonctionnelle de détenir les informations les plus à jour.

Un tel procédé présente un certain nombre d'avantages dans la mesure où l'interface utilisateur d'un intervenant est directement servie depuis une unité de terrain et où la construction d'une page n'exige pratiquement que peu de temps.

Il autorise une séparation du trafic limité d'information qu'il génère, de celui qui est créé par le système pour son propre fonctionnement.

L'exploitation des informations constituées par ces valeurs caractéristiques de processus est aisément réalisable par des intervenants susceptibles d'être très divers dans la mesure où l'insertion de ces valeurs dans des pages HTML les rend aisément transmissibles et facilement utilisables. Un intervenant peut ainsi aisément prendre connaissance d'informations à distance s'il dispose de moyens lui permettant de se relier de l'intérieur ou de l'extérieur à architecture de communication du système. La mise en mémoire des informations au niveau des dispositifs de terrain permet d'assurer efficacement une réelle actualité des informations fournies.

## Revendications

1. Procédé de mise à jour de valeurs caractéristiques de processus d'un système industriel de conduite de processus comportant une pluralité d'unités d'exploitation programmables (1, 2, 3) interconnectées au travers d'une architecture de communication, dans lequel les valeurs caractéristiques de processus sont implantées dans des pages HTML stockées au niveau d'une unité, **caractérisé en ce qu'**il prévoit:
- une mise en mémoire des valeurs caractéristiques de processus réalisé sélectivement dans les unités d'exploitation programmables de terrain (2) où ces valeurs caractéristiques sont exploitées, chacune de ces unités de terrain disposant d'un serveur (7), de type HTTP, qui lui permet de proposer, sur requête externe au moins une page HTML de structure déterminée dans laquelle les valeurs caractéristiques de processus mises en mémoire par l'unité sont implantées;
- une mise à jour en temps réel quasi permanent des pages HTML à la création par implantation des valeurs caractéristiques de processus venant soit d'être collectées sur le terrain par chaque unité de terrain, soit d'être reçues au travers de l'architecture de communication.

2. Procédé selon la revendication 1, dans lequel la mise à jour d'une page HTML demandée à une unité par une requête externe est réalisée par construction de la page à envoyer par remplissage d'une structure de page HTML établie à partir d'un modèle stocké dans la mémoire centrale de ladite unité, à l'aide des dernières valeurs caractéristiques collectées ou reçues par l'unité.

3. Procédé selon l'une des revendications 1, 2, dans lequel les valeurs caractéristiques de processus stockées par une unité de terrain comprennent des valeurs de variables de processus, des paramètres de dispositif et/ou des valeurs prélevées en temps réel collectées et/ou exploitées par cette unité.

## Claims

1. A method of updating characteristic process values of an industrial process control system that comprises a plurality of programmable operating units (1, 2, 3) interconnected by means of a communications architecture, in which the characteristic process values are implanted in HTML pages stored in a unit, the method being **characterized in that** it comprises:
selectively storing characteristic process values in the on-site programmable operating units (2) where said characteristic values are used, each of the on-site units having an HTTP type server (7) enabling it, on external request, to propose at least one HTML page of determined structure in which there are implanted the characteristic process values as stored in the unit; and
virtually permanently updating HTML pages in real time, and on creation, by implanting characteristic process values that have either just been collected on site by each on-site unit, or else have just been received over the communications architecture.

2. A method according to claim 1, in which the updating of an HTML page in a unit in response to an external request is performed by building the page that is to be sent by filling in an HTML page structure based on a model stored in the central memory of said unit, and using the most recent characteristic values as collected or received by the unit.

3. A method according to claim 1 or 2, in which the characteristic process values stored by an on-site unit comprise values of process variables, device parameters, and/or values taken in real time as collected and/or used by said unit.

## Patentansprüche

1. Verfahren zum Aktualisieren von charakteristischen Prozesswerten eines industriellen Prozesssteuerungssystems mit einer Mehrzahl von programmierbaren Betriebseinheiten (1, 2, 3), die untereinander über eine Kommunikationsarchitektur verbunden sind, wobei die charakteristischen Prozesswerte in auf dem Niveau einer Einheit gespeicherte HTML-Seiten eingefügt werden, **dadurch gekennzeichnet, dass** es umfasst:
- eine Aktualisierung der charakteristischen Prozesswerte, die selektiv in den programmierbaren Feldbetriebseinheiten (2) durchgeführt wird, wo diese charakteristischen Werte genutzt werden, wobei jede dieser Feldeinheiten über einen Server (7) vom Typ HTTP verfügt, der es ihr ermöglicht, auf externe Anforderung wenigstens eine HTML-Seite von festgelegter Struktur anzubieten, in der die von der Einheit gespeicherten charakteristischen Prozesswerte eingefügt sind;
- eine quasi ständige Aktualisierung der HTML-Seiten in Echtzeit bei Erzeugung durch Einfügen der charakteristischen Prozesswerte, die soeben im Feld von jeder Feldeinheit gesammelt oder über die Kommunikationsarchitektur empfangen worden sind.

2. Verfahren nach Anspruch 1, bei dem die durch eine externe Anforderung von einer Einheit angeforderte Aktualisierung einer HTML-Seite durchgeführt wird durch Konstruieren der zu sendenden Seite durch Ausfüllen einer HTML-Seitenstruktur, die ausgehend von einem in dem Zentralspeicher der Einheit gespeicherten Modell mit Hilfe der letzten von der Einheit gesammelten oder empfangenen charakteristischen Werte etabliert wird.

3. Verfahren nach einem der Ansprüche 1 oder 2, bei dem die charakteristischen Werte der von einer Feldeinheit gespeicherten Prozesse Werte von Prozessvariablen, Vorrichtungsparameter und/oder von dieser Einheit in Echtzeit gesammelte oder genutzte abgegriffene Werte umfasst.
